# EUROPEAN PATENT APPLICATION

(11) **EP 4 546 332 A1**
(43) Date of publication of application: **30.04.2025**
(21) Application number: 23827215.7
(22) Date of filing: 21.06.2023
(51) Int. Cl.: G10H 1/34, G06F 3/0346, G06F 3/038, G10H 1/00

(54) **CONTROLLER, MUSICAL SOUND GENERATION SYSTEM, METHOD, PROGRAM, AND STORAGE MEDIUM**

(30) Priority: 23.06.2022 JP 2022101371
(71) Applicant: DENTSU INC., Tokyo 105-7001 (JP)
(72) Inventor: TANAKA Naoki, Tokyo 105-7001 (JP); MURAKAMI Shintaro, Tokyo 105-7001 (JP); KUKI Keita, Tokyo 105-7001 (JP); AI Kohei, Tokyo 105-7001 (JP)
(74) Representative: Bardehle Pagenberg Partnerschaft mbB Patentanwälte Rechtsanwälte
(86) International application number: PCT/JP2023/022851
(87) International publication number: WO 2023/249032

(57) **Abstract**

A controller that controls a musical sound generation device has an acquisition unit that acquires gaze information of a user, a display control unit that displays a plurality of operating portions associated with control commands of the musical sound generation device on a display unit, and displays a pointer for selecting the operating portion on the display unit based on the gaze information acquired by the acquisition unit, a determination unit that determines selection of an operating portion overlapping at least a part of the pointer among the plurality of operating portions, and a communication unit that transmits, to the musical sound generation device, information conforming to a MIDI standard corresponding to the operating portion of which the selection has been determined by the determination unit.

## Description

### Technical Field

The present invention relates to a controller, a musical sound generation system, a method, a program, and a storage medium.

### Background Art

Conventionally, a performance interface that generates performance control information for controlling musical sound generated from a musical sound generation device according to a physical condition of an operating portion is known (see Patent Literature 1).

### Citation List

### Patent Literature

Patent Literature 1: JP 2001-195059 A

### Summary of Invention

### Technical Problem

However, conventionally, there has been no proposal for use by a user with limited movement of the body, such as an ALS patient.

A problem to be solved by the present invention is to enable a user with limited movement of a body to easily control a musical sound generation device.

### Solution to Problem

A controller according to a first aspect is a controller that controls a musical sound generation device and has an acquisition unit that acquires gaze information of a user, a display control unit that displays a plurality of operating portions associated with control commands of the musical sound generation device on a display unit, and displays a pointer for selecting the operating portion on the display unit based on the gaze information acquired by the acquisition unit, a determination unit that determines selection of an operating portion overlapping at least a part of the pointer among the plurality of operating portions, and a communication unit that transmits, to the musical sound generation device, information conforming to a MIDI standard corresponding to the operating portion of which the selection has been determined by the determination unit.

With this configuration, a user with limited movement of a body can easily control the musical sound generation device.

A controller according to a second aspect is the controller according to the first aspect, further having a reception unit that receives an input operation by a user using an input device, in which the determination unit determines selection of the operating portion according to the input operation received by the reception unit.

With this configuration, it is possible to quickly determine selection of an operating portion by using both an input (gaze input) using gaze information of a user and an input using the input device.

A controller according to a third aspect is the controller according to the second aspect, in which the input operation is pressing of a switch with a part of a body of the user, and the determination unit determines selection of the operating portion without the gaze information of the user and a user operation other than pressing of the switch.

With this configuration, an operating portion can be selected by gaze information of a user and a switch operation, and thus even a user with limited movement of a body can easily control the musical sound generation device.

A controller according to a fourth aspect is the controller according to any one of the first to third aspects, in which the determination unit determines selection of an operating portion overlapping at least a part of the pointer for longer than a predetermined time.

With this configuration, even a user who has difficulty in moving hands and feet can select an operating portion by using gaze information.

A controller according to a fifth aspect is the controller according to any one of the first to fourth aspects, in which the determination unit determines selection of an operating portion overlapping a reference position of the pointer.

With this configuration, it is possible to select an operating portion with more accuracy.

A controller according to a sixth aspect is the controller according to the fifth aspect, in which the reference position is substantially the center of the pointer.

With this configuration, it is possible to more easily select an operating portion.

A controller according to a seventh aspect is the controller according to any one of the first to sixth aspects, in which the display control unit displays beats and bar numbers of music being played near the pointer.

With this configuration, a user can operate a controller while normally checking beats and bar numbers of music being played.

A controller according to an eighth aspect is the controller according to the seventh aspect, in which the display control unit enlarges a region including the pointer and displays the enlarged region on the display unit.

With this configuration, it is possible to easily select a desired operating portion among from a plurality of operating portions.

A controller according to a ninth aspect is the controller according to any one of the first to eighth aspects, in which the display control unit displays the plurality of operating portions near a screen center of the display unit more than the plurality of operating portions around a screen.

With this configuration, even a user with limited movement of an eyeball can easily select an operating portion.

A controller according to a tenth aspect is the controller according to any one of the first to ninth aspects, in which the plurality of operating portions include an XY pad capable of simultaneously changing two types of parameters.

With this configuration, the XY pad can be operated using the gaze information.

A controller according to an eleventh aspect is the controller according to the first aspect, in which the determination unit determines the selection of the operating portion without a user operation other than the gaze information of the user.

With this configuration, an operating portion can be selected only by gaze information of a user (gaze input), and thus even a user with limited physical freedom can easily control the musical sound generation device.

A musical sound generation system according to a twelfth aspect is a musical sound generation system including a musical sound generation device and a controller that controls the musical sound generation device, and the musical sound generation system has an acquisition unit that acquires gaze information of a user, a display control unit that displays a plurality of operating portions associated with control commands of the musical sound generation device on a display unit, and displays a pointer for selecting the operating portion on the display unit based on the gaze information acquired by the acquisition unit, a determination unit that determines selection of an operating portion overlapping at least a part of the pointer among the plurality of operating portions, and a communication unit that transmits, to the musical sound generation device, information conforming to a MIDI standard corresponding to the operating portion of which the selection has been determined by the determination unit.

A method according to a thirteenth aspect is a method of controlling a musical sound generation device, the method having a step of acquiring gaze information of a user, a step of displaying a plurality of operating portions associated with control commands of the musical sound generation device on a display unit, and displaying a pointer for selecting the operating portion on the display unit based on the gaze information, a step of determining selection of an operating portion overlapping at least a part of the pointer among the plurality of operating portions, and a step of transmitting, to the musical sound generation device, information conforming to a MIDI standard corresponding to the determined operating portion.

With this configuration, a user with limited movement of a body can easily control the musical sound generation device.

A program according to a fourteenth aspect is a program for causing a computer to execute a method of controlling a musical sound generation device, the method having a step of displaying a plurality of operating portions associated with control commands of the musical sound generation device on a display unit, and displaying a pointer for selecting the operating portion on the display unit based on gaze information of a user, a step of determining selection of an operating portion overlapping at least a part of the pointer among the plurality of operating portions, and a step of transmitting, to the musical sound generation device, information conforming to a MIDI standard corresponding to the determined operating portion.

A storage medium according to a fifteenth aspect is a computer-readable storage medium storing the program according to the fourteenth aspect.

### Brief Description of Drawings

Fig. 1 is a diagram illustrating an example of a system configuration of a musical sound generation system 1 according to the present embodiment.
Fig. 2 is a block diagram illustrating an example of a hardware configuration of the musical sound generation system 1 according to the present embodiment.
Fig. 3 is a block diagram illustrating an example of a functional configuration of the musical sound generation system 1 according to the present embodiment.
Fig. 4 is a flowchart illustrating an example of an operation of the musical sound generation system 1 according to the present embodiment.
Fig. 5 is a diagram illustrating an example of a user interface of a controller 2 according to the present embodiment.
Fig. 6 is an enlarged view of a region A of the user interface illustrated in Fig. 5.
Fig. 7 is a diagram illustrating a modification example of the user interface of the controller 2 according to the present embodiment.

### Description of Embodiments

Hereinafter, embodiments of the present invention will be described in detail with reference to the accompanying drawings. Note that, in the respective drawings, components having equivalent functions are denoted by the same reference signs, and detailed description of the components having the same reference signs will not be repeated.

### (Configuration of Musical Sound Generation System)

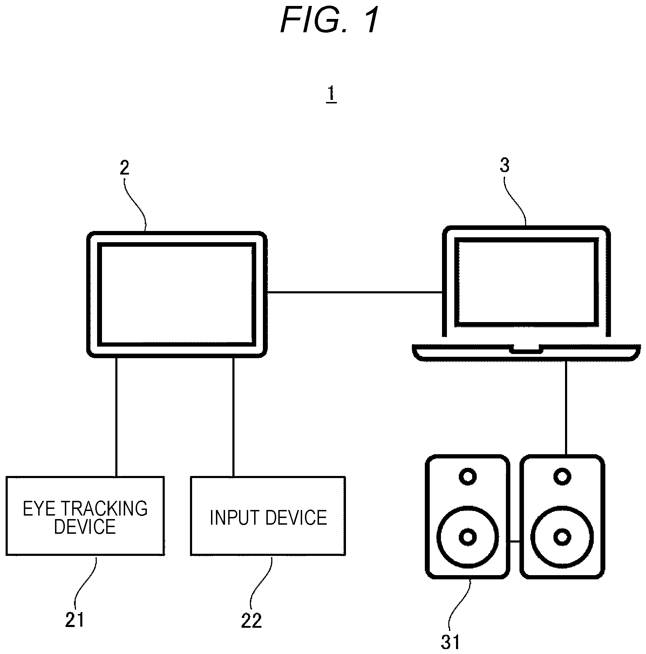

Fig. 1 is a diagram illustrating a schematic configuration of a musical sound generation system 1 according to an embodiment. As illustrated in Fig. 1, the musical sound generation system 1 according to the present embodiment includes a controller 2 and a musical sound generation device 3. The controller 2 and the musical sound generation device 3 are communicatively connected by a communication interface (I/F) which will be described later.

The controller 2 is a device that controls the musical sound generation device 3 based on a communication protocol conforming to the MIDI standard. Then, the controller 2 is connected to an eye tracking device 21 for a user having a limit on the movement of the body, such as an ALS patient, to input various types of information to the controller 2 by gaze input, and an input device 22 on which a user performs a manual operation (the controller 2 may include the eye tracking device 21 and the input device 22).

The eye tracking device 21 tracks the eye movement (gaze direction) of the user and outputs gaze information to the controller 2. The gaze information can be generated, for example, by extracting a characteristic pattern such as a pupil from an image obtained by sequentially capturing an eyeball image of the user. The present embodiment focuses on a point that an ALS patient can move the line of sight, and controls the musical sound generation device 3 using the gaze information.

The input device 22 is an input device that can be operated by a user, such as a manual switch or a foot switch. When the user performs an operation using the input device 22, a signal corresponding to the operation is output from the input device 22 to the controller 2. It is desirable that the input device 22 enables a user with limited movement of the body, such as an ALS patient, to easily perform an input operation, and for example, the input operation is pressing of a switch by the body of the user.

The musical sound generation device 3 is a device that generates a musical sound based on a signal that conforms to the MIDI standard and has been received from the controller 2. For example, by installing and executing integrated music software called a digital audio workstation (DAW) on a personal computer, the personal computer can be used as the musical sound generation device. In addition, the musical sound generation device 3 includes a sound system 31 that emits a sound based on an acoustic signal.

### (Hardware Configuration)

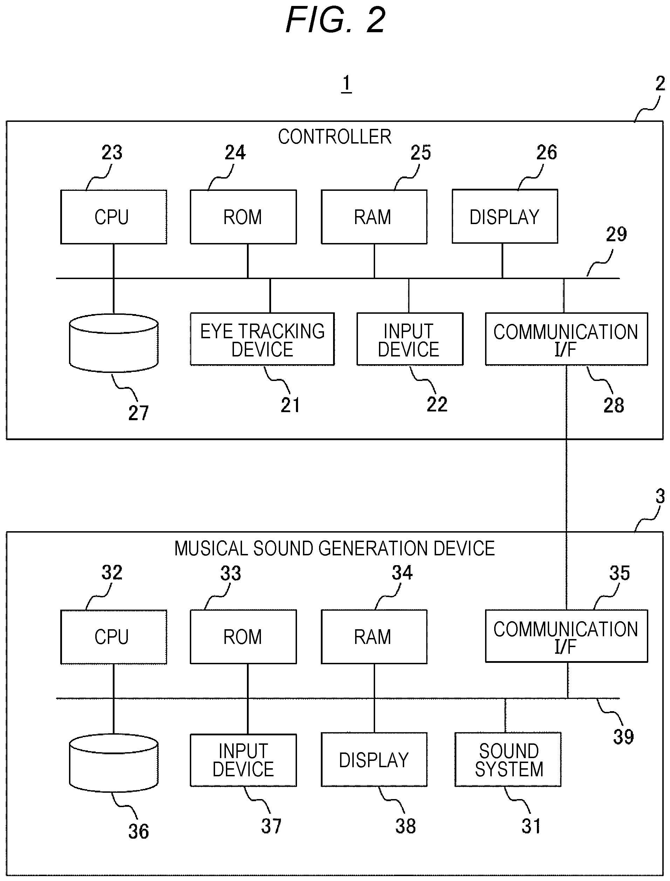

Next, a hardware configuration of the musical sound generation system 1 according to the present embodiment will be described. Fig. 2 is a block diagram illustrating an example of the hardware configuration of the musical sound generation system 1 according to the present embodiment.

In the controller 2, a CPU 23 is a processing device that controls the entire operation of the controller 2. A ROM 24 is a nonvolatile memory that stores a control program executed by the CPU 23 and various types of data. A RAM 25 is a volatile memory used for a load area and a work area of a program executed by the CPU 23. A display 26 is a display device that displays various types of information (user interface). A storage device 27 is storage means for storing various types of information, and may be built into the main body of the controller 2 or a storage medium may be attachable and detachable to and from the storage device 27. A communication interface (I/F) 28 is an interface for connection with the musical sound generation device 3. A bus 29 is a bus line that connects the above components to each other.

In the present embodiment, the musical sound generation device 3 has a form in which DAW software is installed on a PC. By executing the DAW software, various functions of music production (for example, a hard disk recording function, a function of creating and editing MIDI data and audio data, a mixing function, a sequencer function, and the like) can be realized. Note that, in the present embodiment, an example in which the musical sound generation device 3 is configured by a PC and the DAW software will be described, but a single sequencer device or the like may be used.

In the musical sound generation device 3, a CPU 32, a ROM 33, a RAM 34, a storage device 36, an input device 37 such as a mouse and a keyboard, and a display 38 are basic components provided in a general-purpose PC. A communication I/F 35 is an interface for connection with the controller 2. Note that the communication I/Fs 28 and 35 are, for example, a wired I/F dedicated to music such as MIDI, a general-purpose wired I/F such as a USB or IEEE 1394, or a general-purpose wireless I/F such as a wireless LAN or Bluetooth (registered trademark). The sound system 31 emits an analog acoustic signal transferred from a codec which is a sound I/O including a digital-analog (D/A) conversion function or the like. The sound system 31 is a function added in a form in which a board or a card is inserted into a slot provided in a PC constituting the musical sound generation device 3. A bus 39 is a bus line that connects the above components to each other.

### (Functional Configuration)

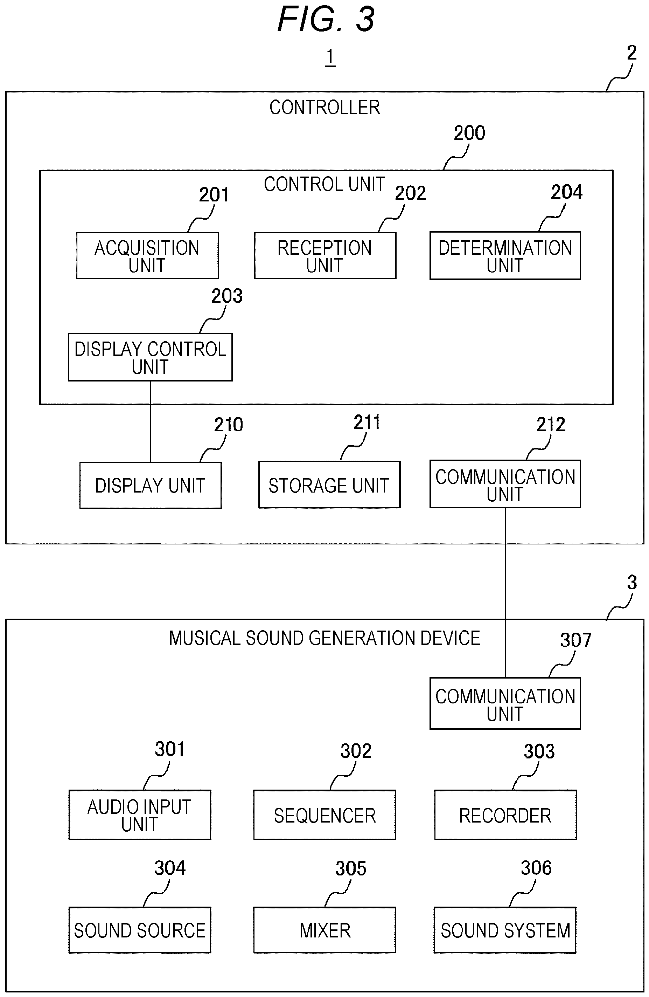

Next, a functional configuration of the musical sound generation system 1 according to the present embodiment will be described. Fig. 3 is a diagram illustrating an example of the functional configuration of the musical sound generation system 1 according to the present embodiment.

As illustrated in Fig. 3, the controller 2 has a control unit 200, a display unit 210, a storage unit 211, and a communication unit 212.

The control unit 200 has an acquisition unit 201, a reception unit 202, a determination unit 204, and a display control unit 203.

The acquisition unit 201 acquires gaze information of a user of the controller 2. Specifically, the acquisition unit 201 acquires information (gaze information) regarding the gaze direction of the user, which is output from the eye tracking device 21.

The reception unit 202 receives an input operation by the user using the input device 22(manual switch, foot switch, and the like).

The display control unit 203 displays a plurality of operating portions (icons) associated with control commands of the musical sound generation device 3 on the display unit 210 (corresponding to the display 26 in Fig. 2) together with various types of information. In addition, the display control unit 203 displays a pointer for operating the operating portion on the display unit 210 based on the gaze information of the user acquired by the acquisition unit 201.

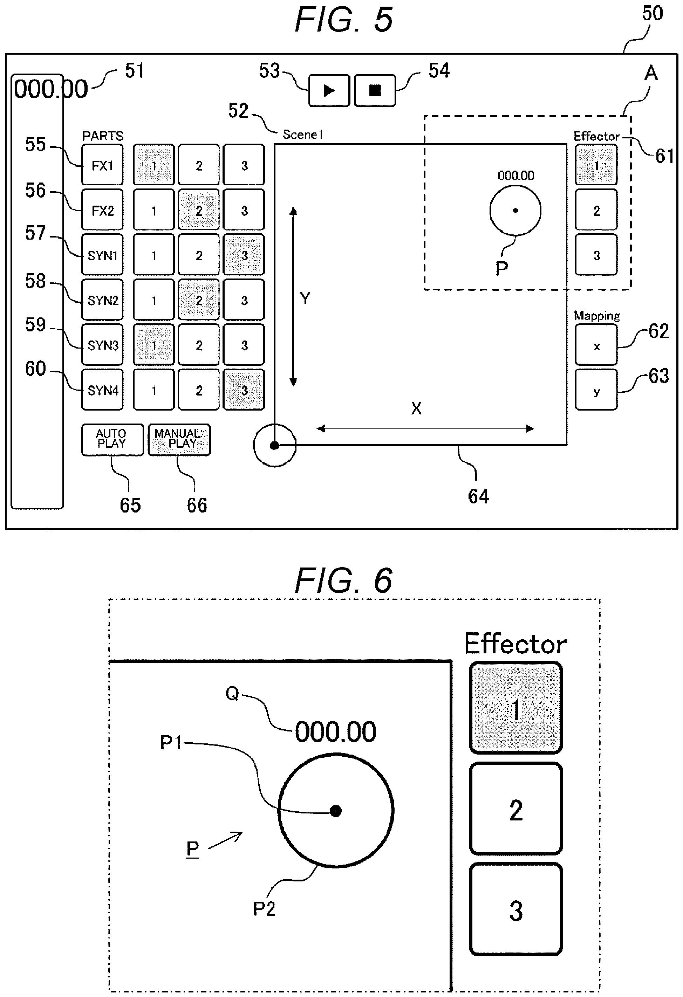

Fig. 5 is a diagram illustrating an example of an user interface 50 displayed on the display unit 210 by the display control unit 203. As illustrated in Fig. 5, the user interface 50 includes an index 51 and a performance scene name part 52 as indicators. Furthermore, the user interface 50 includes, as a plurality of operating portions, a playback button 53, a stop button 54, effector buttons 55 and 56, synthesizer buttons 57 to 60, an effector type selection button 61, mapping buttons 62 and 63, an XY pad 64, an automatic performance button 65, and a manual performance button 66. The respective operating portions 53 to 66 are associated with control commands of the musical sound generation device 3 (DAW), and, when the user operates (selects) each of the operating portions 53 to 66, the musical sound generation device 3 performs processing according to each control command.

The index 51 indicates beats and bar numbers of music being played in the form of "000.00 (beat.bar number)". For example, the name of the user who is a performer is displayed in the performance scene name part 52.

The playback button 53 is an operating portion for starting play of music. Furthermore, the stop button 54 is an operating portion for stopping playback of music. The effector buttons 55 and 56 are operating portions for executing sound effects. The synthesizer buttons 57 to 60 are operating portions for musical scale performance and musical sound synthesis. Note that, regarding each of the operating portions 55 to 60, three types of operating portions can be selected, and an icon with a number of 1 to 3 is displayed next to each operating portion. The effector type selection button 61 is an operating portion for selecting the type of effector. The mapping buttons 62 and 63 are operating portions for assigning an operation in an X-direction and an operation in a Y-direction in the XY pad 64 that receives a two-dimensional operation, as operations for different increase/decrease operating portions of the DAW. The XY pad 64 is an operating portion capable of simultaneously changing two types of parameters. By moving a pointer P on the XY pad 64, two types of parameters can be simultaneously changed. Note that the operation of the XY pad 64 may be enabled while the reception unit 202 receives the operation by the input device 22. For example, the operation (change of two types of parameters) of the XY pad 64 may be enabled in a manner that the pointer P is moved on the XY pad 64 by gaze input in a state where the user presses the manual switch (input device 22). The automatic performance button 65 is an operating portion for playing back a musical sound recorded in advance. The manual performance button 66 is an operating portion for starting real-time performance and recording.

In addition, the user interface 50 includes the pointer P for operating/selecting each operating portion described above. The pointer P is displayed on the display unit 210 based on the gaze information acquired by the acquisition unit 201. Specifically, the position of a gaze point on a screen of the display unit 210 is obtained from the gaze information, and the pointer P is displayed at the obtained position.

Fig. 6 is an enlarged view of a region A in Fig. 5. As illustrated in Fig. 6, the pointer P has a reference position P1 and a circular region P2 having a predetermined size with the reference position P1 as a substantial center. In addition, an index Q is displayed near the circular region P2 of the pointer P. The index Q is an index indicating the beats and bar numbers of music being played in the form of "000.00 (beat.bar number)", similarly to the index 51.

Furthermore, as illustrated in Fig. 6, the display control unit 203 can enlarge and display a part of the user interface 50 (for example, region A). As a result, it is possible to more reliably operate/select each operating portion. In a case where a part of the user interface 50 is enlarged and displayed, the index 51 displayed on the upper left of the screen of the user interface 50 is out of a display range. However, since the index Q is displayed near the pointer P as described above, the user can operate each operating portion while normally checking the beats and bar numbers of the music being played.

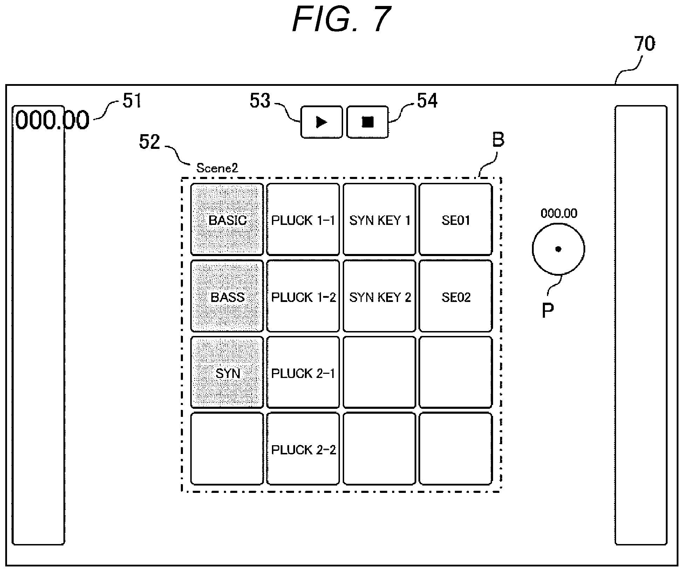

Fig. 7 is a diagram illustrating a user interface 70 according to a modification example of the user interface 50. As illustrated in Fig. 7, in the user interface 70, a plurality of operating portions are displayed (arranged) near a screen center of the display unit 210 more than a plurality of operating portions around a screen. As a result, even a user who has difficulty in moving the line of sight from one end to the other end of the screen of the display unit 210 and has limited movement of the eyeball can easily operate the operating portion.

Returning to Fig. 3, the determination unit 204 determines selection of an operating portion overlapping at least a part of the pointer P among the plurality of operating portions. As a result, the selection of the operating portion can be determined only by the gaze input using the eye tracking device 21. Furthermore, the determination unit 204 may determine selection of an operating portion overlapping the reference position P1 of the pointer P. As a result, in a case where the operating portions are arranged adjacent to each other, it is possible to reduce an erroneous operation (erroneous selection) of the operating portion. Furthermore, the determination unit 204 may determine selection of an operating portion overlapping a part of the pointer P for longer than a predetermined time (for example, 2 seconds). As a result, it is possible to more reliably determine the selection of the operating portion. Such a selection method is also useful for a user who has difficulty in an operation other than moving the line of sight since the operating portion can be selected only by the gaze information.

In addition, the determination unit 204 may determine the selection of the operating portion according to the input operation using the input device 22 by the user, which has been received by the reception unit 202. That is, the user can select the operating portion by the gaze input using the eye tracking device 21 and determine the selection of the operating portion using the input device 22 (manual switch, foot switch, and the like). In this manner, the user can more quickly determine the selection of the operating portion as compared with a case of determining the selection of the operating portion overlapping at least a part of the pointer P for longer than a predetermined time. Such a selection method is useful for a user who can operate the input device 22 with a part of the body such as a hand or a foot in addition to moving the line of sight.

The storage unit 211 stores information regarding each control command of the musical sound generation device 3 (DAW) associated with each operating portion.

The communication unit 212 transmits, to the musical sound generation device 3, information (control command information, MIDI event information) conforming to the MIDI standard corresponding to the operating portion of which the selection has been determined by the determination unit 204.

Next, a functional configuration of the musical sound generation device 3 will be described. As illustrated in Fig. 3, the musical sound generation device 3 has an audio input unit 301, a sequencer 302, a recorder 303, a sound source 304, a mixer 305, a sound system 306, and a communication unit 307.

The audio input unit 301 inputs an analog acoustic signal converted into digital and inputs a digital acoustic signal itself.

The sequencer 302 records MIDI event information received by the communication unit 307. The MIDI event information is supplied to the sound source 304 which will be described later.

The sound source 304 is a software sound source. The sound source 304 generates an audio signal according to the input MIDI event information. The audio signal output from the sound source 304 is input to the recorder 303 and the mixer 305.

The recorder 303 records the audio signal input by the audio input unit 301 and the audio signal output from the sound source 304. The audio signal recorded in the recorder 303 is output to the mixer 305 according to a playback instruction.

The mixer 305 supplies the audio signal output from the sound source 304 or the recorder 303 to the sound system 306.

### (Example of Operation)

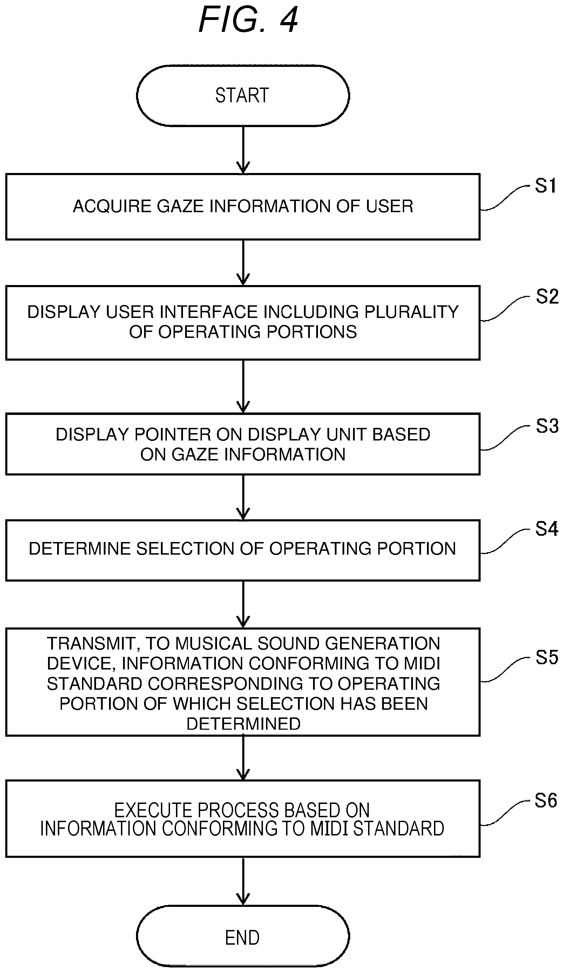

Next, an example of an operation of the musical sound generation system 1 will be described. Fig. 4 is a flowchart illustrating the example of the operation of the musical sound generation system 1.

First, the acquisition unit 201 of the control unit 200 in the controller 2 acquires the gaze information of the user output from the eye tracking device 21 (Step S1). The gaze information may be acquired at any timing, and is normally acquired in real time, for example.

Then, the display control unit 203 of the control unit 200 displays a plurality of operating portions associated with the control commands of the musical sound generation device 3 (DAW) on the display unit 210 (Step S2).

In addition, the display control unit 203 of the control unit 200 displays a pointer for operating the operating portion on the display unit 210 based on the gaze information acquired by the acquisition unit 201 (Step S3).

Then, the determination unit 204 of the control unit 200 determines selection of an operating portion overlapping at least a part of the pointer among the plurality of operating portions (Step S4).

Subsequently, the communication unit 307 transmits, to the musical sound generation device 3, information conforming to the MIDI standard corresponding to the operating portion of which the selection has been determined by the determination unit 204 (Step S5).

Then, the musical sound generation device 3 performs various types of processing (execution of control commands, recording of MIDI events, and the like) based on the information conforming to the MIDI standard, which has been received from the controller 2 (Step S6).

As described above, according to the present embodiment, the musical sound generation system 1 has the acquisition unit 201 that acquires the gaze information of the user, the display control unit 203 that displays the plurality of operating portions associated with the control commands of the musical sound generation device on the display unit 210 and displays the pointer P for operating the operating portion on the display unit 210 based on the gaze information acquired by the acquisition unit 201, the determination unit 204 that determines the selection of the operating portion overlapping at least a part of the pointer P among the plurality of operating portions, and the communication unit 212 that transmits, to the musical sound generation device 3, information conforming to the MIDI standard corresponding to the operating portion of which the selection has been determined by the determination unit 204. Therefore, the user with limited movement of the body can easily control the musical sound generation device 3.

Any part or all of the functional units described in the present specification may be realized by a program. The program referred to in the present specification may be distributed by being non-temporarily recorded in a computer-readable recording medium, may be distributed via a communication line (including wireless communication) such as the Internet, or may be distributed in a state of being installed in any terminal.

Based on the above description, a person skilled in the art may be able to conceive additional effects and various modification examples of the present invention, but aspects of the present invention are not limited to the individual embodiments described above. Various additions, changes, and partial deletions can be made in a range without departing from the conceptual idea and spirit of the present invention derived from the contents defined in the claims and equivalents thereof.

For example, what has been described herein as one device (alternatively, member, the same applies below) (including what is depicted in the drawings as one device) may be realized by a plurality of devices. Conversely, what has been described herein as a plurality of devices (including what is depicted in the drawings as a plurality of devices) may be realized by one device. Alternatively, some or all of means or functions assumed to be included in a certain device (for example, a server) may be included in another device (for example, a user terminal).

In addition, not all the matters described in the present specification are essential requirements. In particular, matters described in the present specification and not described in the claims can be regarded as any additional matters.

Note that the applicant of the present invention is merely aware of the invention disclosed in the document in the column of "Citation List" in the present specification, and the present invention is not necessarily intended to solve the problem in the invention disclosed in the literature. The problem to be solved by the present invention should be recognized in consideration of the entire specification. For example, in the present specification, in a case where there is a description that a predetermined effect is exhibited by a specific configuration, it can be said that the problem of reversing the predetermined effect is solved. However, such a specific configuration is not necessarily an essential requirement.

## Claims

1. A controller that controls a musical sound generation device, the controller comprising:
an acquisition unit configured to acquire gaze information of a user;
a display control unit configured to display a plurality of operating portions associated with control commands of the musical sound generation device on a display unit, and displays a pointer for selecting the operating portion on the display unit based on the gaze information acquired by the acquisition unit;
a determination unit configured to determine selection of an operating portion overlapping at least a part of the pointer among the plurality of operating portions; and
a communication unit configured to transmit, to the musical sound generation device, information conforming to a MIDI standard corresponding to the operating portion of which the selection has been determined by the determination unit.

2. The controller according to claim 1, further comprising:
a reception unit configured to receive an input operation by a user using an input device, wherein
the determination unit determines selection of the operating portion according to the input operation received by the reception unit.

3. The controller according to claim 2, wherein the input operation is pressing of a switch with a part of a body of the user, and
the determination unit determines the selection of the operating portion without gaze information of the user and a user operation other than pressing of the switch.

4. The controller according to claim 1, wherein the determination unit determines selection of an operating portion overlapping at least a part of the pointer for a predetermined time.

5. The controller according to claim 1, wherein the determination unit determines selection of an operating portion overlapping a reference position of the pointer.

6. The controller according to claim 5, wherein the reference position is substantially a center of the pointer.

7. The controller according to any one of claims 1 to 6, wherein the display control unit displays beats and bar numbers of music being played near the pointer.

8. The controller according to claim 7, wherein the display control unit enlarges a region including the pointer and displays the enlarged region on the display unit.

9. The controller according to claim 1, wherein the display control unit displays the plurality of operating portions near a screen center of the display unit more than the plurality of operating portions around a screen.

10. The controller according to claim 1, wherein the plurality of operating portions include an XY pad capable of simultaneously changing two types of parameters.

11. The controller according to claim 1, wherein the determination unit determines selection of the operating portion without a user operation other than the gaze information of the user.

12. A musical sound generation system including a musical sound generation device and a controller that controls the musical sound generation device, the musical sound generation system comprising:
an acquisition unit configured to acquire gaze information of a user;
a display control unit configured to display a plurality of operating portions associated with control commands of the musical sound generation device on a display unit, and displays a pointer for selecting the operating portion on the display unit based on the gaze information acquired by the acquisition unit;
a determination unit configured to determine selection of an operating portion overlapping at least a part of the pointer among the plurality of operating portions; and
a communication unit configured to transmit, to the musical sound generation device, information conforming to a MIDI standard corresponding to the operating portion of which the selection has been determined by the determination unit.

13. A method of controlling a musical sound generation device, the method comprising:
a step of acquiring gaze information of a user;
a step of displaying a plurality of operating portions associated with control commands of the musical sound generation device on a display unit, and displaying a pointer for selecting the operating portion on the display unit based on the gaze information;
a step of determining selection of an operating portion overlapping at least a part of the pointer among the plurality of operating portions; and
a step of transmitting, to the musical sound generation device, information conforming to a MIDI standard corresponding to the determined operating portion.

14. A program for causing a computer to execute a method of controlling a musical sound generation device, the method comprising:
a step of displaying a plurality of operating portions associated with control commands of the musical sound generation device on a display unit, and displaying a pointer for selecting the operating portion on the display unit based on gaze information of a user;
a step of determining selection of an operating portion overlapping at least a part of the pointer among the plurality of operating portions; and
a step of transmitting, to the musical sound generation device, information conforming to a MIDI standard corresponding to the determined operating portion.

15. A computer-readable storage medium storing the program according to claim 14.
